# EUROPEAN PATENT SPECIFICATION

(11) **EP 1 229 333 B1**
(45) Date of publication and mention of the grant of the patent: **23.11.2016**
(21) Application number: 01120483.1
(22) Date of filing: 28.08.2001
(51) Int. Cl.: G01N 35/00

(54) **Reagent setup processing equipment**
Anordnung zur Reagenzaufbereitung
Appareil de traitement des réactifs

(30) Priority: 02.02.2001 JP 2001026291
(43) Date of publication of application: 07.08.2002
(73) Proprietor: Hitachi, Ltd., Chiyoda-ku, Tokyo 100-8010 (JP)
(72) Inventor: Nishida, Masaharu, Tokyo 171-0051 (JP); Sato, Takeshi, Hitatchinaka-shi, Ibaraki 312-0033 (JP); Mitsumaki, Hiroshi, Mito-shi, Ibaraki 310-0851 (JP)
(74) Representative: Strehl Schübel-Hopf & Partner

(56) References cited:
- EP-A2- 0 445 616
- DE-U1- 29 823 595

## Description

### BACKGROUND OF THE INVENTION

The present invention relates to a reagent setup method and reagent setup processing equipment, both of which are intended to register parameters in an analytical apparatus.

In order to start up an analytical apparatus and put it into use, parameters on the required reagents of a plurality of reagent manufacturers are registered on an inspection item basis, that is to say, reagent setup or reagent parameter setup takes place.

Under prior art, reagent setup operations consist of three steps: parameter registration, data measurement, and result reporting.

Following completion of reagent setup for Company A's reagents, reagent setup for Company B's reagents takes place, which is further followed by reagent setup for Company C's reagents. In this way, the same steps are repeated for each company (reagent manufacturer).

Under prior art, since separate reagent setup operations are performed for each reagent manufacturer as described above, the reagent setup time tends to increase, and this, in turn, not only increases the startup time for the analytical apparatus correspondingly, but also makes related preparatory steps troublesome for the user.

DE 298 23 595 U1 discloses an analyser with a reagent setup apparatus having the features of the preamble of claim 1.

### SUMMARY OF THE INVENTION

In view of the above, the present invention is intended to provide the methods and equipment that enable the reduction of the total time required for reagent setup even in, and hence, the simplification and acceleration of the startup of, an analytical apparatus in which a plurality of reagent manufacturers are involved.

### [Means of Solving the Problems]

The present invention provides the reagent setup apparatus defined in claim 1. A further advantageous features is set out in claim 2.

### BRIEF DESCRIPTION OF DRAWINGS

FIG. 1 is a diagram showing a reagent setup method, one embodiment of the present invention.
FIG. 2 is an analytical apparatus setup diagram and a comparative diagram against the prior scheme.
FIG. 3 is a detailed diagram of processing equipment.
FIG. 4 is a view showing the screen display made at the apparatus of user X.
FIG. 5 is a comparative representation of the total reagent setup time between the prior scheme and a usage scheme embodied according to the present invention.
FIG. 6 is a comparative representation of a data measuring time between the prior scheme and a usage scheme embodied according to the present invention.

### DETAILED DESCRIPTION OF THE PREFERRED EMBODIMENTS

The preferred embodiments pertaining to the present invention are described below using drawings.

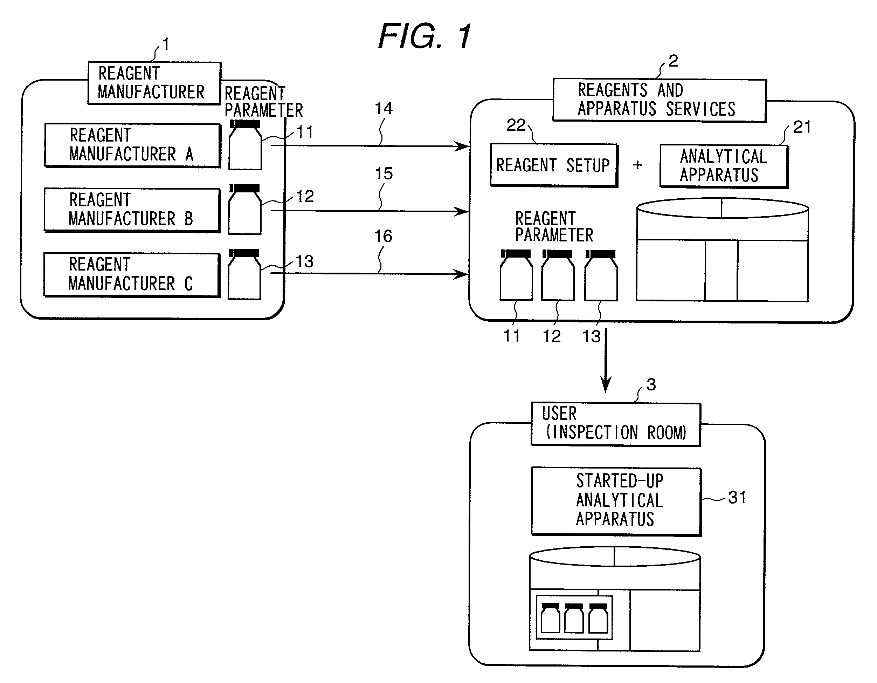

FIG. 1 shows a reagent setup method, one embodiment of the present invention.

Reagent manufacturers 1, a reagents and apparatus services provider 2, and a user (inspection room) 3 get involved in this embodiment of the present invention.

Reagent manufacturers 1 consist of reagent manufacturers A, B, and C. Parameters 11, 12, and 13, each of which relates to the required reagents of reagent manufacturer A, B, or C, respectively, are concurrently transmitted to reagents and apparatus services provider 2 in the form of either communications lines, which function as transmission circuits 14, 15, and 16, or floppy disks. Reagents and apparatus services provider 2 receives a request (order) for reagent setup 22 in analytical apparatus 21 which was manufactured by an analytical apparatus manufacturer.

After receiving reagent parameters 11 to 13, reagents and apparatus services provider 2 stores the parameters in batch form into a storage medium (described later). The batch-stored reagent-dependent parameters corresponding to the particular analytical apparatus specifications are registered in analytical apparatus 21 by use of the storage medium in order to complete the reagent setup step. The registration is conducted for either the analytical apparatus of the corresponding analytical apparatus manufacturer before the apparatus is delivered, or the analytical apparatus that was delivered to the user.

Analytical apparatus 31 that has been started up is installed in the inspection room of user 3.

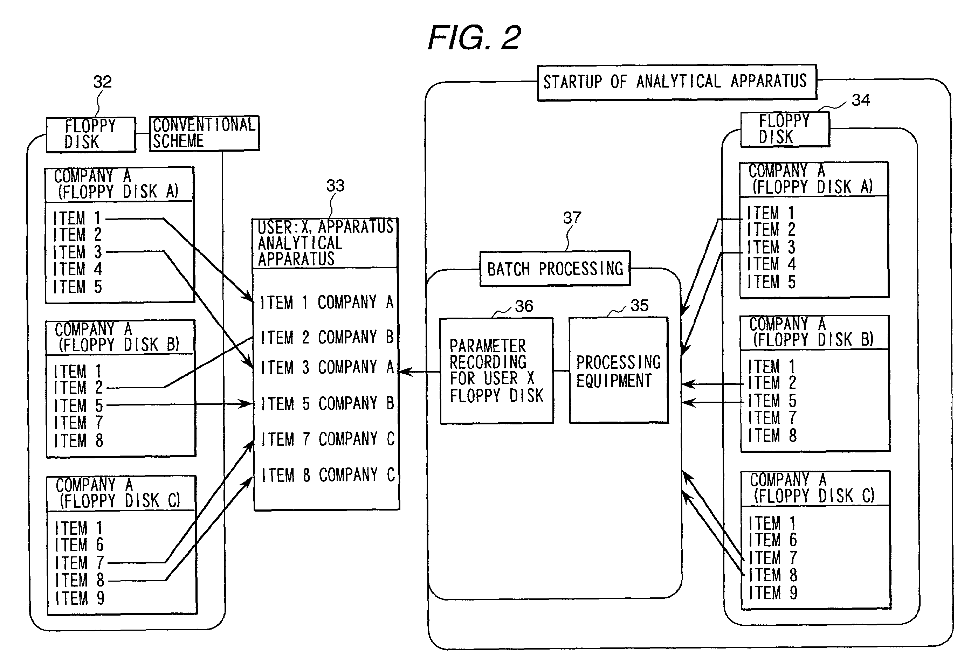

In FIG. 2, analytical apparatus startup based on the present invention is represented in comparative form with respect to the prior scheme. Under the prior scheme, the contents of floppy disks A, B, and C (namely, floppy disks 32) which contain parameters relating to the required reagents of companies (reagent manufacturers) A, B, and C, respectively, are sequentially registered in analytical apparatus 33 of user X according to the schedule of the user. In this case, the contents of the floppy disks are registered in sequence so that item 5 of company A (reagent manufacturer A), item 2 of company B, item 3 of company A, item 5 of company B, item 7 of company C, and item 8 of company C correspond to the inspection items 1, 2, 3, 5, 7, and 8, respectively, within apparatus 33 of user X.

Under the method embodied according to the present invention, the respective items of companies A, B, and C are concurrently transmitted to processing equipment 35 via floppy disks 34, namely, floppy disks A, B, and C, respectively, then a parameter recording floppy disk 36 for user X is created from the floppy disks mentioned above, and each item is recorded on floppy disk 36 during batch processing 37.

All reagent parameters are registered in batch form in apparatus 33 of user X by use of the parameter recording floppy disk 36 for user X.

Although this embodiment uses a floppy disk format to register all reagent parameters in batch form in apparatus 33 of user X, all parameters can likewise be registered in batch form by use of networked lines.

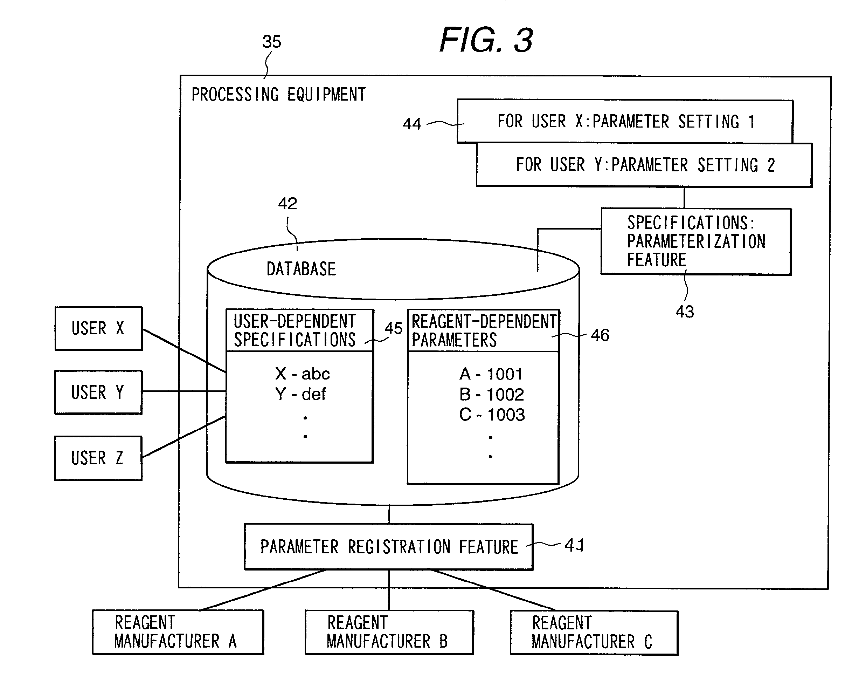

Details of processing equipment 35 are shown in FIG. 3.

Processing equipment 35 comprises a parameter registration feature 41, a database 42, a specifications-parameters linking feature 43, and a user - parameter set processing means 44.

As described earlier in this SPECIFICATION, all parameters on the respective reagents from reagent manufacturers A, B, and C, are concurrently registered in the parameter registration feature 41 of the processing equipment 35 of reagents and equipment services provider 2.

In addition to the user-dependent specifications 45 (for example, X-abc, Y-def) of users X, Y, and Z, reagent-dependent parameters 46 (for example, A-1001, B-1002, C-1003) are recorded in database 42.

Specifications-parameters linking feature 43 establishes linkage between user-dependent specifications 45 and reagent-dependent parameters 46, and processes parameter set 1 for user X and parameter set 2 for user Y.

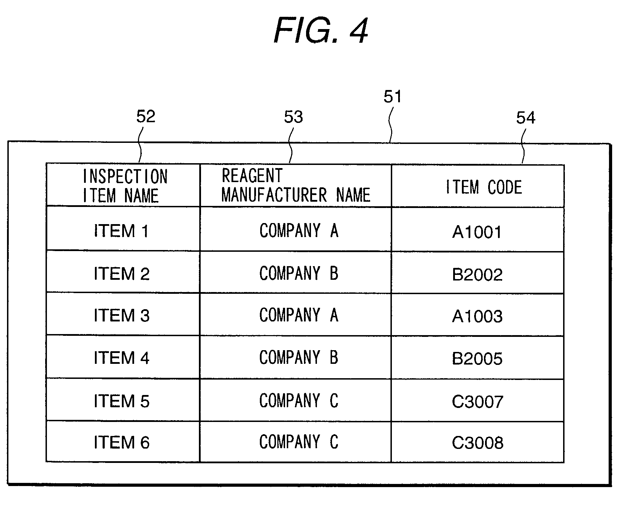

The screen display made at the apparatus of user X by batch registration is shown in FIG. 4.

Inspection item name 52, reagent manufacturer name 53, and item code 54 are listed on display 51 in the figure.

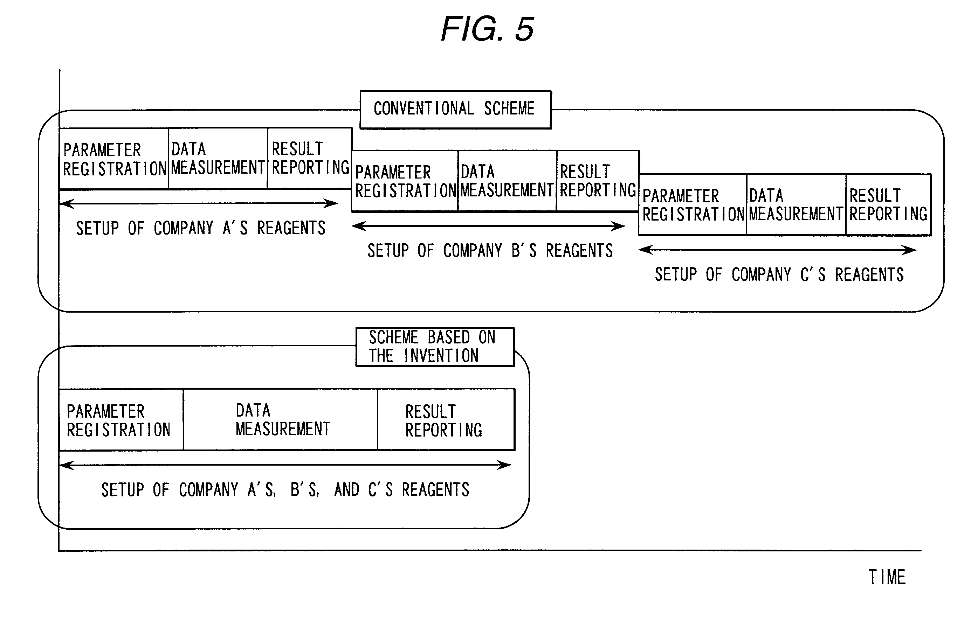

FIG. 5 is a comparative representation of the total reagent setup time between the prior scheme and a usage scheme embodied according to the present invention. As shown in the figure, under the prior scheme, setup of Company A's reagents is accomplished by executing parameter registration, data measurement, and result reporting, in that order, and the same also applies to Company B's and Company C's reagents. Undoubtedly, therefore, the time required is equal to a multiple of the number of reagent manufacturers involved.

Under the usage scheme according to the present invention, since, as described earlier in this SPECIFICATION, all respective parameters on Company A' s, Company B's, and Company C's reagents are concurrently recorded on floppy disks and then registered in one floppy disk and since the parameter registration, data measurement, and result reporting operations are continuously performed, although the time required for the continuous operations themselves increases, the total time required for each operation in reagent setup is reduced and thus the operation time as a whole can be saved as shown in the figure. Also, the user is relieved from the troublesomeness of scheduling the setup and having the reagent manufacturers register the respective reagent parameters.

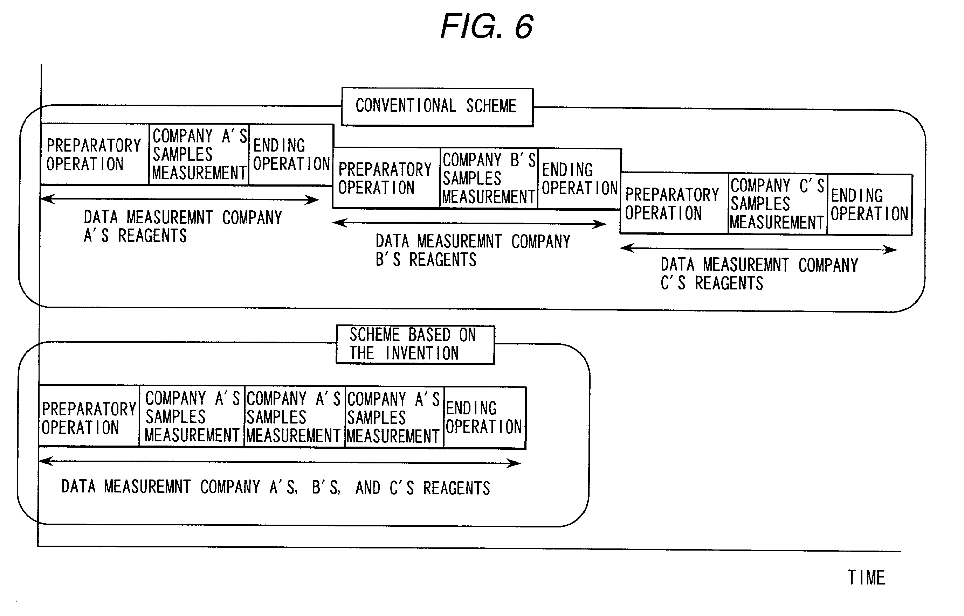

FIG. 6 is a comparative representation of a data measuring time between the prior scheme and a usage scheme embodied according to the present invention. As shown in the figure, under the prior scheme, Company A's data measurement is accomplished by executing preparatory steps, Company A's samples measurement, and apparatus shutdown, in that order, and the same also applies to Company B's and Company C' s data. Undoubtedly, therefore, the time required is equal to a multiple of the number of reagent manufacturers involved.

Under the usage scheme according to the present invention, since, as described earlier in this SPECIFICATION, all respective parameters on Company A' s, Company B' s, and Company C's reagents are concurrently recorded on floppy disks and then registered in one floppy disk, Company A's, Company B's, and Company C's data measurements are performed in batch form by executing preparatory steps, Company A's samples measurement, Company B's samples measurement, Company C's samples measurement, and apparatus shutdown, in that order. The time required is therefore reduced.

Reagents and equipment services provider 2 charges the reagent manufacturer or/and user for the setup of the samples and for the early startup of the analytical apparatus.

As heretofore described, according to the present invention, since all parameters are concurrently recorded and registered, even if the reagent information is to be set up in an analytical apparatus in which a plurality of reagent manufacturers are involved, the total reagent setup time required will be reduced and thus the startup of the analytical apparatus can be simplified and accelerated.

Also, the reagent setup time required can be further reduced since data measurements can be continuously performed for the required reagents of each company.

In addition, the user can make a request (place an order) to the reagents and equipment services provider for batch reagent setup operations and is relieved from troublesome operations associated with the startup of the analytical apparatus.

## Claims

1. A reagent setup apparatus for registering reagent parameters relating to reagents of a plurality of reagent manufacturers on an inspection item basis in an analytical apparatus, wherein said reagent setup apparatus comprises:
parameter registration means (41) for entering and registering the reagent parameters, and
a database (42) for storing the reagent parameters;
**characterized by**
specification-parameter linking means (43) for setting the reagent parameters corresponding to the analytical apparatus specifications on the basis of the contents of the database,
wherein the database is arranged to store the reagent parameters in a batch form and the batch form is arranged such that a series of data measurements based on the batch-registered reagent parameters corresponding to the analytical apparatus specifications can be performed using the required reagents of said multiple reagent manufacturers.

2. The apparatus of claim 1, adapted to create a series of result reports at once after the series of data measurements has been performed.

## Patentansprüche

1. Reagenzeinstellungsvorrichtung zum Aufnehmen von Reagenzparametern, die sich auf Reagenzien mehrerer Reagenzienhersteller beziehen, auf der Grundlage von Inspektionsgegenständen in einer Analysevorrichtung, wobei die Reagenzeinstellungsvorrichtung umfasst:
eine Parameteraufnahmeeinrichtung (41) zum Eingeben und Aufnehmen der Reagenzparameter und
eine Datenbank (42) zum Speichern der Reagenzparameter;
**gekennzeichnet durch**
eine Spezifikationsparameter-Verbindungseinrichtung (43) zum Einstellen der Reagenzparameter, die der Spezifikation der Analysevorrichtung entsprechen, auf der Grundlage des Inhalts der Datenbank,
wobei die Datenbank dazu ausgelegt ist, die Reagenzparameter in einer Stapelanordnung zu speichern, und die Stapelanordnung so ausgelegt ist, dass eine Reihe von Datenmessungen auf der Grundlage der in Stapelweise aufgenommenen Reagenzparameter, die der Spezifikation der Analysevorrichtung entsprechen, unter Verwendung der erforderlichen Reagenzien der mehreren Reagenzienhersteller durchgeführt werden kann.

2. Vorrichtung nach Anspruch 1, dazu ausgelegt, eine Reihe von Ergebnisberichten auf einmal zu erzeugen, nachdem die Reihe von Datenmessungen durchgeführt worden ist.

## Revendications

1. Appareil de traitement de réactifs pour enregistrer des paramètres de réactifs relatifs à des réactifs d'une pluralité de fabricants de réactifs sur une base par élément d'inspection dans un appareil analytique, dans lequel ledit appareil de traitement de réactifs comprend :
des moyens d'enregistrement de paramètres (41) pour entrer et enregistrer les paramètres de réactifs, et
une base de données (42) pour stocker les paramètres de réactifs ;
**caractérisé par**
des moyens de liaison paramètres-spécifications (43) pour traiter les paramètres de réactifs correspondant aux spécifications de l'appareil analytique sur la base du contenu de la base de données,
dans lequel la base de données est agencée pour stocker les paramètres de réactifs sous la forme de lots et la forme de lots est agencée de sorte qu'une série de mesures de données basées sur les paramètres de réactifs enregistrés par lots correspondant aux spécifications de l'appareil analytique puissent être effectuées en utilisant les réactifs requis desdits multiples fabricants de réactifs.

2. Appareil selon la revendication 1, adapté à créer une série de rapports de résultats en une fois après l'exécution de la série de mesures de données.
